# FASCICULE DE BREVET EUROPEEN

(11) **EP 3 121 063 B1**
(45) Date de publication et mention de la délivrance du brevet: **13.12.2023**
(21) Numéro de dépôt: 16180894.4
(22) Date de dépôt: 22.07.2016
(51) Int. Cl.: B60Q 1/30

(54) **DISPOSITIF LUMINEUX EN AU MOINS DEUX PARTIES POUR UN VÉHICULE AUTOMOBILE, VÉHICULE ASSOCIÉ**
LEUCHTVORRICHTUNG AUS MINDESTENS ZWEI TEILEN FÜR KRAFTFAHRZEUG, ENTSPRECHENDER KRAFTFAHRZEUG
LIGHTING DEVICE IN AT LEAST TWO PARTS FOR A MOTOR VEHICLE, CORRESPONDING VEHICLE

(30) Priorité: 23.07.2015 FR 1556979
(43) Date de publication de la demande: 25.01.2017
(73) Titulaire: VALEO VISION, 93012 Bobigny Cedex (FR)
(72) Inventeur: LEVASSEUR, Stéphane, 49125 BRIOLLAY (FR)
(74) Mandataire: Valeo Visibility

(56) Documents cités:
- WO-A1-2015/155433
- DE-A1- 10 147 584
- DE-A1-102007 029 864
- DE-A1-102013 218 152
- DE-A1-102016 001 206
- DE-B3-102006 014 561

## Description

L'invention a trait au domaine de l'éclairage et de la signalisation lumineuse des véhicules automobiles. En particulier, l'invention concerne des feux réalisant une fonction lumineuse en utilisant deux parties distinctes, dont l'une peut être mobile par rapport à l'autre, comme par exemple un feu stop arrière dont une première partie est montée sur une aile arrière d'un véhicule, tandis qu'une deuxième partie est montée sur la porte du coffre.

Dans le domaine de l'éclairage et de la signalisation lumineuse des véhicule automobiles, il devient de plus en plus courant d'avoir recours à des sources lumineuses de type diode électroluminescente, LED. Une LED est un composant semi-conducteur, qui, lorsqu'il est parcouru par un courant électrique d'une intensité prédéterminée, émet des rayons lumineux. Un flux lumineux d'une intensité prédéterminée, généralement en rapport avec l'intensité du courant électrique qui traverse la LED, peut alors être mesuré. La technologie des LEDs permet d'une part de réduire les besoins d'énergie électrique des dispositifs d'éclairage et/ou de signalisation, et d'autre part elle permet aux constructeurs de véhicules de créer des signatures optiques intéressantes et individuelles. Une pluralité de LEDs peut par exemple être disposée le long d'un contour curviligne.

Il est connu de pourvoir les faces arrières d'un véhicule de feux arrière qui sont disposés intégralement sur des parties fixes de la carrosserie. Il s'agit par exemple sur les ailes latérales arrière du véhicule. Alternativement les feux arrière peuvent être séparés en deux parties en plus, au moins une partie étant disposée sur une partie fixe, tandis qu'au moins une autre partie du même feu est disposée sur la porte du coffre du véhicule. Cette partie du feu est donc mobile par rapport à la partie fixe, et les deux parties du même feu peuvent prendre des positions relatives différentes en dépendance de la position de la porte du coffre. Cette solution est de plus en plus commune, puisque beaucoup d'utilisateurs revendiquent des ouvertures de coffres larges. Comme ceci engendre la nécessité de prévoir des portes de coffres toujours plus grandes, l'espace disponible pour le montage des feux arrière fixes devient de plus en plus restreint. D'où paraît la nécessité de disposer une partie des feux sur une face de la porte du coffre. Les feux arrière peuvent réaliser des fonctions lumineuses différentes du véhicule, comme par exemple un feu stop, un indicateur de direction, ou autres.

De manière connue, l'alimentation des deux parties (fixe et mobile) d'un même feu est réalisée de manière commune pour les deux parties. C'est-à-dire, chacune des parties du feu émet à tout instant un flux lumineux d'une intensité identique. Ceci ne correspond pas à une utilisation efficace, notamment lorsque la porte du coffre, qui porte une partie du feu arrière est ouverte et lorsque le feu en question est allumé.

Il est aussi connu du document DE 10 2013 218152 A1 d'allumer et éteindre chaque partie du feu en fonction de la position de la porte de coffre.

L'invention a pour objectif de pallier à au moins un des problèmes posés et d'améliorer les solutions proposées par l'art antérieur.

L'invention a pour objet un dispositif lumineux pour un véhicule automobile. Le dispositif comprend au moins deux sources lumineuses destinées à participer à la réalisation d'une même fonction lumineuse réglementaire prédéterminée du véhicule automobile. L'invention est telle que définie dans la revendication 1.

On entend notamment par fonction lumineuse réglementaire une fonction lumineuse dont l'intensité lumineuse doit être comprise entre une intensité lumineuse inférieure réglementaire prédéterminée et une intensité lumineuse supérieure réglementaire prédéterminée.

Le dispositif peut de préférence comprendre des moyens capables d'obtenir un signal indicatif de la position relative de la première et de la deuxième source.

De préférence, les moyens de commande du flux peuvent faire partie de moyens de pilotage de l'alimentation des sources lumineuses. Avantageusement, le flux lumineux émis par une source lumineuse est modifié en changeant l'intensité du courant électrique qui alimente la source lumineuse en question.

Les moyens de commande du flux lumineux peuvent de préférence être configurés pour commander la première source de manière à ce que la première source émette un flux lumineux d'une première intensité lorsque la position relative indiquée correspond à la première position prédéterminée, et un flux d'une deuxième intensité lorsque la position relative indiquée correspond à la deuxième position prédéterminée, la première intensité étant inférieure à la deuxième intensité.

De préférence, les moyens de commande du flux lumineux peuvent être configurés pour commander la deuxième source de manière à ce que la deuxième source émette un flux lumineux d'une première intensité lorsque la position relative indiquée correspond à la première position prédéterminée, et un flux d'une deuxième intensité lorsque la position relative indiquée correspond à la deuxième position prédéterminée, la première intensité étant supérieure à la deuxième intensité.

De préférence, les moyens de commande du flux lumineux peuvent être configurés pour commander les première et deuxième sources lumineuses de sorte à ce que la somme des premières intensités du flux lumineux émis par ces sources soit inférieure ou égale à une intensité lumineuse supérieure réglementaire prédéterminée.

Les moyens de commande du flux lumineux peuvent de manière préférée être configurés pour commander les première et deuxième sources lumineuses de sorte à ce que la somme des deuxièmes intensités du flux lumineux émis par ces sources soit supérieure ou égale à une intensité lumineuse inférieure réglementaire prédéterminée.

Les moyens de commande du flux lumineux sont configurés de manière à ce que l'intensité lumineuse inférieure de la première et de la deuxième source soit une intensité minimale, et à ce que l'intensité supérieure de la première et de la deuxième source soit une intensité maximale. De préférence l'intensité inférieure peut être une intensité nulle. L'intensité maximale est de préférence l'intensité lumineuse maximale que ladite source est capable d'émettre.

Selon l'invention, les moyens de commande du flux lumineux peuvent être configurés de manière à ce que la première et/ou la deuxième source émettent un flux d'une intensité comprise entre l'intensité inférieure et l'intensité supérieure, lorsque la position indiquée est une position intermédiaire entre la première position et la deuxième position prédéterminée.

Avantageusement, l'intensité du flux lumineux peut graduellement augmenter/diminuer en fonction du rapprochement de la position indiquée à l'une des deux positions prédéterminées.

Les moyens de commande du flux lumineux peuvent préférentiellement être configurés de manière à alimenter les sources lumineuses à l'aide d'un courant électrique d'une intensité qui est une fonction de l'intensité du flux lumineux à émettre par les sources.

De préférence, la première et/ou la deuxième source lumineuse peut comprendre plusieurs sources lumineuses élémentaires.

Les sources lumineuses peuvent avantageusement comprendre au moins une puce semiconductrice émettrice de lumière, par exemple une diode électroluminescente, LED, ou une diode électroluminescente organique, OLED.

De manière préférée, les moyens d'obtention peuvent comprendre des moyens récepteurs aptes à recevoir un signal provenant d'un réseau de communication interne au véhicule automobile.

Les moyens d'obtention peuvent de préférence comprendre des moyens de détection de la position relative des première et deuxième sources.

Les moyens d'obtention peuvent préférentiellement comprendre un inclinomètre ou un accéléromètre.

Les moyens d'obtention et/ou les moyens de commande peuvent de préférence comprendre un élément microcontrôleur.

De préférence, le dispositif peut comprendre une pluralité de faces physiquement disjointes par laquelle la lumière émise par la première et/ou la deuxième source lumineuse est émise.

L'invention a également pour objet un véhicule automobile équipé d'un dispositif lumineux.

Le véhicule est remarquable en ce que le dispositif lumineux correspond au dispositif selon l'invention.

Dans le véhicule selon l'invention, la première source est arrangée sur une aile arrière du châssis, et la deuxième source lumineuse est arrangée sur une face de la porte du coffre, qui est mobile par rapport à l'aile arrière du châssis.

La première position prédéterminée correspond à la position fermée de la porte du coffre, et la deuxième position prédéterminée correspond à la position ouverte de la porte du coffre.

De préférence, la première source lumineuse peut faire partie d'un premier dispositif optique comportant une première face de sortie et la deuxième source lumineuse peut faire partie d'un deuxième dispositif optique comportant une deuxième face de sortie, la première face de sortie étant située dans le prolongement de la deuxième face de sortie lorsque les sources sont dans la première position relative.

De préférence, la première et la deuxième sources lumineuses émettent des flux lumineux respectifs d'intensités égales lorsque la porte du coffre est fermée. Lorsque la porte du coffre est ouverte, la première source émet un flux lumineux d'une intensité supérieure à cette intensité, alors que la deuxième source émet un flux lumineux d'une intensité inférieure.

De préférence le dispositif est un dispositif d'éclairage ou un dispositif de signalisation d'un véhicule automobile.

De manière préférentielle, les sources lumineuses réalisent la fonction lumineuse feu d'arrêt.

En utilisant les mesures de l'invention il devient possible de satisfaire des dispositions réglementaires en vigueur par rapport à l'intensité du flux lumineux émis par des dispositifs lumineux agencés sur deux parties d'un véhicule automobile, l'une étant mobile par rapport à l'autre. Un tel cas se présente par exemple pour un feu stop arrière, disposé en partie sur une aile arrière du véhicule et en partie sur la porte du coffre du véhicule. Evidemment l'invention ne se limite pas à cet exemple concret. Dans un tel exemple, la réglementation prévoit qu'il est nécessaire que la partie fixe du feu émette un flux lumineux d'une première intensité prédéterminée lorsque la porte du coffre est ouverte. Dans cette disposition, en principe uniquement la partie fixe est visible d'une position située en arrière du véhicule. Lorsque la porte du coffre est fermée, cette même première intensité lumineuse doit être réalisée de manière globale par l'ensemble des parties fixe et mobile, montées sur l'aile et la porte du coffre, du véhicule. Il s'ensuit qu'il est permis que la partie fixe émette un flux lumineux d'une deuxième intensité, moindre que la première intensité, lorsque la porte du coffre est fermée. En effet, la partie mobile du feu étant alors visible, elle peut également contribuer à l'émission du flux lumineux global du feu arrière. Le dispositif selon l'invention permettent entre autres de réaliser ce cas prévu par la réglementation. Ceci permet notamment une gestion plus efficace et plus économique de l'énergie électrique nécessaire pour le fonctionnement des feux en question.

D'autres caractéristiques et avantages de la présente invention seront mieux compris à l'aide de la description exemplaire et des dessins parmi lesquels :
- la figure 1 est une illustration schématique d'une vue latérale de la partie arrière d'un véhicule automobile équipe d'un dispositif selon un mode de réalisation préférentiel de l'invention ;
- la figure 2 est une illustration d'un mode de réalisation préférentiel du dispositif selon l'invention ;
- la figure 3 est une illustration d'un mode de réalisation préférentiel du dispositif selon l'invention.

Dans la description qui suit, des numéros de référence similaires seront utilisés pour décrire des concepts similaires à travers des modes de réalisation différents de l'invention. Ainsi, les numéros 100, 200, 300 décrivent par exemple un dispositif lumineux dans trois modes de réalisation différents conformes à l'invention.

Sauf indication spécifique du contraire, des caractéristiques techniques décrites en détails pour un mode de réalisation donné peuvent être combinés aux caractéristiques techniques décrites dans le contexte d'autres modes de réalisation décrits à titre exemplaire et non limitatif.

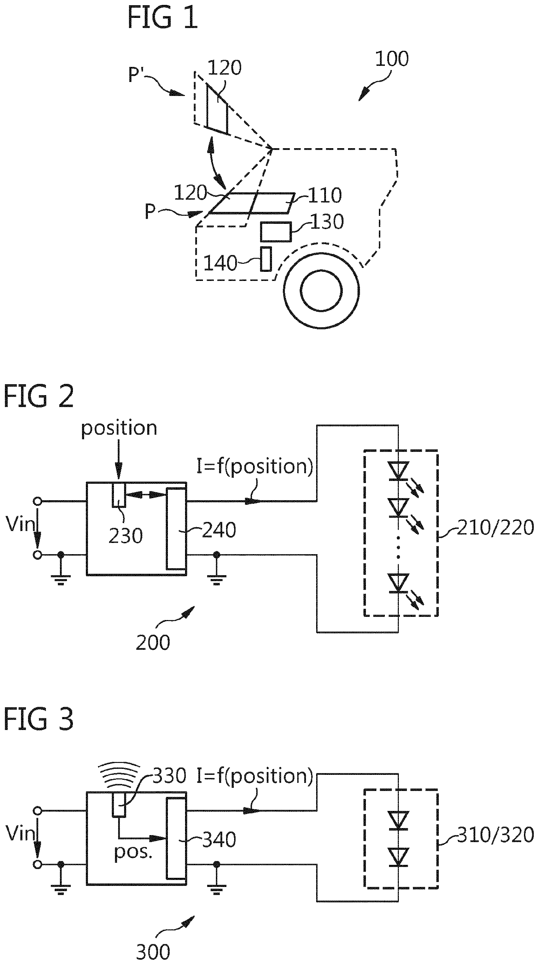

La figure 1 illustre de manière schématique la partie arrière d'un véhicule automobile, qui comprend un dispositif lumineux, représenté par le feu arrière, selon l'invention. L'invention sera illustrée à l'aide du dispositif lumineux 100 dont une première partie 110 est arrangée sur une partie de l'aile arrière fixe du véhicule, tandis qu'une deuxième partie 120 est arrangée sur la porte du coffre du véhicule. Comme illustré, il s'ensuit que la deuxième partie 120 puisse prendre au moins deux postions P, P' distinctes par rapport à la première partie 110, en dépendance de l'état fermé ou ouvert de la porte du coffre. Evidemment l'invention peut trouver des applications autres que celle qui est décrite à titre exemplaire, lorsque les contraintes techniques sont identiques à celles qui sont décrites. De même, le dispositif peut être constitué de plus de deux parties, les parties mobiles et fixes comprenant par exemple des pluralités respectives de parties.

Chacune des parties 110, 120 peut être décrite de manière générale par le terme une source lumineuse. Une source lumineuse peut être composée d'une pluralité de sources lumineuses élémentaires, telles que par exemple des diodes électroluminescentes, LEDs, des diodes laser ou des diodes électroluminescentes organiques, OLED.

Des composants d'un dispositif lumineux pour un véhicule automobile qui n'ont pas d'impact direct sur le fonctionnement de l'invention ne sont pas décrits de manière détaillée dans le contexte de la présente invention. Ainsi, il est connu que de tels dispositif comprennent des moyens optiques comprenant par exemple des lentilles optiques et/ou des guides de lumière pour guider la lumière émise par chacune des sources élémentaires. De manière similaire, il est connu d'utiliser des moyens de pilotage de l'alimentation des sources élémentaires. De tels moyens servent à convertir un courant continu d'une première intensité, fourni en général par une source de courant interne au véhicule telle qu'une batterie, en un courant de charge d'une deuxième intensité, adapté à alimenter les sources de lumière élémentaires. Il est également connu de fournir plusieurs intensités de courant distinctes en fonction de l'intensité requise de la lumière émise par les sources lumineuses élémentaires.

Le dispositif comprend des moyens 130 capables d'obtenir un signal indicatif de la position relative des première et deuxième sources de lumière, donc des parties fixe et mobile du dispositif lumineux 100. En utilisant ce signal qui indique la position relative des deux parties du feu, des moyens de commande du flux lumineux 140, qui peuvent par exemple être intégrés aux moyens de pilotage de l'alimentation des sources de lumière, permettent aux sources 110, 120 d'émettre des flux lumineux d'intensités différentes en fonction de leur position relative. Par exemple, lorsque une première position P est indiquée par les moyens 130, un courant d'une première intensité est utilisé pour alimenter les LEDs de la source 110, tandis que lorsqu'une deuxième position P' est indiquée par les moyens 130, un courant d'une deuxième intensité est utilisé pour alimenter les LEDs de la source 110.

Comme l'intensité de la lumière émise par une LED dépend de l'intensité du courant électrique qui la traverse, des flux lumineux d'intensités différentes sont ainsi réalisés en fonction de la position P, P' signalée.

La figure 2 montre un mode de réalisation préférentiel du dispositif 200 selon l'invention. Les sources lumineuses 210, 220 sont montrées de manière équivalente. Les moyens de commande du flux lumineux 240 obtiennent un signal indiquant la position relative des sources lumineuses 210, 220 et fournissent aux sources un courant d'alimentation d'une intensité qui est une fonction de la position des sources. Dans ce mode de réalisation, les moyens d'obtention 230 sont réalisés par des moyens de réception aptes à lire des messages qui circulent sur un réseau de communication du véhicule. Typiquement le système informatique d'un véhicule automobile a accès à une pluralité de paramètres du véhicule, y compris l'état d'ouverture ou de fermeture des portes. Ainsi, lorsque la porte du coffre est ouverte/fermée, un message correspondant peut circuler sur le bus de communication du véhicule, qui peut être un bus de type « controller area network », CAN. Les moyens d'obtention 230 forment une interface par rapport au bus de communication, de manière à ce que l'information en question puisse être utilisée par les moyens de commande du flux lumineux 240. Alternativement, au lieu de lire l'information d'ouverture/fermeture de la porte du coffre sur le bus de communication, l'information lue peut également indiquer de manière directe une intensité de flux qui est à émettre par chacune des sources 210, 220. Il suffit que l'information obtenue par les moyens 230 puisse indiquer, de manière directe ou indirecte, la position relative des deux sources lumineuses 220, 230. L'information spécifique qui circule sur le bus de communication dépend des implémentations spécifiques des systèmes de contrôle de bord de chaque véhicule.

La figure 3 montre un autre mode de réalisation préférentiel du dispositif 300 selon l'invention. Les sources lumineuses 310, 320 sont montrées de manière équivalente. Les moyens de commande du flux lumineux 340 obtiennent un signal indiquant la position relative des sources lumineuses 310, 320 et fournissent aux sources un courant d'alimentation d'une intensité qui est une fonction de la position relative des sources. Dans ce mode de réalisation, les moyens d'obtention 330 sont des moyens actifs qui permettent de détecter la position d'au moins la source mobile 320 par rapport à la source fixe 310. Les moyens d'obtention peuvent par exemple comprendre des composants électroniques tels que des gyroscopes, des accéléromètres ou des inclinomètres. Dans un mode de réalisation particulièrement préféré. De tels composants électroniques sont installés sur le circuit imprimé qui porte les sources élémentaires de la deuxième source 320. Lorsque la porte du coffre du véhicule est ouverte, la position du circuit imprimé change. Ce changement est détecté par les composants électroniques en question de manière connue. Le signal de détection est alors relayé de manière filaire ou non filaire aux moyens de commande du flux lumineux 340, qui alimentent les sources 320 et 310 en fonction du signal de détection reçu.

Un tel mode de réalisation, comprenant des moyens d'obtention 330 actifs, présente l'avantage d'être indépendant du système informatique et/ou de communication du véhicule automobile qu'il équipe.

Une fois que le signal indiquant la position relative des sources lumineuse est disponible, le procédé de gestion du flux peut être réalisé selon plusieurs façons, par exemple en utilisant des circuits électroniques dédiés ou en programmant un élément microcontrôleur programmable. De telles implémentations sont à la portée de l'homme du métier.

Un exemple de gestion préféré est décrit en prenant référence par rapport à la figure 1. Lorsque la porte du coffre du véhicule automobile est fermée, les moyens 130 détectent la position P de la source lumineuse 120 par rapport à la source 110. Comme conséquence de cette détection, les moyens de commande 140 amènent les sources 110 et 120 à émettre chacune un flux lumineux d'une même première intensité.

Lorsque la porte du coffre du véhicule automobile est complètement ouverte, les moyens 130 détectent la position P' de la source lumineuse 120 par rapport à la source 110. Comme conséquence de cette détection, les moyens de commande 140 amènent la première source 110 à augmenter l'intensité du flux lumineux émis par rapport à la première intensité, pour arriver à une deuxième intensité plus importante. Par exemple, la première intensité peut correspondre à la moitié de la deuxième intensité.

De préférence, les moyens de commande 140 amènent en même temps la deuxième source 120 à diminuer l'intensité du flux lumineux émis par rapport à la première intensité pour arriver à une deuxième intensité moins importante, par exemple nulle.

De manière avantageuse, les moyens d'obtention 130 et de gestion 140 sont configurés de manière à ce que, pour des positions intermédiaires détectées entre la position fermée P et la position complètement ouverte P' de la porte du coffre, les intensités des flux lumineux émis par les sources 110 et 120 se situent à des niveaux intermédiaires entre les extrêmes décrits.

De cette façon, lorsque la porte du coffre passe graduellement de l'état fermé à l'état complètement ouvert, l'intensité du flux lumineux émis par la première source 110 passe graduellement du premier niveau d'intensité à un niveau d'intensité double. En même temps, l'intensité du flux lumineux émis par la deuxième source 120 passe graduellement du premier niveau à un niveau d'intensité nulle. De même, lorsque la porte du coffre se referme, les sources lumineuses 110 et 120 sont de nouveau graduellement amenées à émettre des flux lumineux respectivement égaux correspondant au premier niveau d'intensité.

L'intensité globale émise par les sources lumineuses 110 et 120 et de préférence commandée, dans toutes les positions relatives prises par les deux sources, de façon à ce que le dispositif réalise les contraintes d'une fonction lumineuse réglementaires. On entend notamment par fonction lumineuse réglementaire une fonction lumineuse dont l'intensité lumineuse doit être comprise entre une intensité lumineuse inférieure réglementaire prédéterminée et une intensité lumineuse supérieure réglementaire prédéterminée.

## Revendications

1. Dispositif lumineux (100, 200, 300) pour un véhicule automobile, comprenant au moins deux sources lumineuses (110,120 ; 210,220 ; 310,320) destinées à participer à la réalisation d'une même fonction lumineuse réglementaire prédéterminée du véhicule automobile, desquelles au moins une première source (110, 210, 310) est destinée à être disposée sur une partie de l'aile arrière fixe du véhicule automobile, et au moins une deuxième source (120, 220, 320) est destinée à être disposée sur une partie mobile du véhicule, ladite partie mobile étant la porte du coffre du véhicule, de façon à ce que la première (110, 210, 310) et la deuxième (120, 220, 320) sources soient aptes à prendre aux moins deux positions relatives distinctes et prédéterminées (P, P') l'une par rapport à l'autre, la première position prédéterminée correspondant à la position fermée de la porte du coffre, et la deuxième position prédéterminée correspondant à la position ouverte de la porte du coffre, le dispositif étant tel que le dispositif comprend des moyens de commande du flux lumineux (140, 240, 340) d'au moins une des sources lumineuses, configurés pour commander l'émission de flux lumineux différents par cette source lumineuse, en fonction de la position relative de la première (110, 210, 310) et de la deuxième (120, 220, 320) sources, et que les moyens de commande du flux lumineux sont configurés pour commander les première et deuxième sources lumineuses de sorte à ce que ces sources, lorsqu'elles sont dans ladite première position relative, émettent ensemble un premier flux lumineux global apte à réaliser ladite fonction lumineuse réglementaire prédéterminée et, lorsqu'elles sont dans ladite deuxième position relative, émettent ensemble un deuxième flux lumineux global, d'une intensité différente du premier flux lumineux global, apte à réaliser ladite fonction lumineuse réglementaire prédéterminée, et le dispositif étant tel que les moyens de commande du flux lumineux sont configurés de manière à ce que l'intensité lumineuse de la première source (110, 210, 310) soit une intensité inférieure dans l'une des deux positions prédéterminées (P, P') et soit une intensité supérieure dans l'autre des deux positions prédéterminées (P, P'), l'intensité lumineuse de la deuxième source (120, 220, 320) soit une intensité inférieure dans l'une des deux positions prédéterminées (P, P') et soit une intensité supérieure dans l'autre des deux positions prédéterminées (P, P'),
le dispositif étant **caractérisé en ce que** les moyens de commande du flux lumineux (140, 240, 340) sont configurés de manière à ce que la première (110, 210, 310) et/ou la deuxième (120, 220, 320) source émet un flux d'une intensité comprise entre l'intensité inférieure et l'intensité supérieure, lorsque la position indiquée est une position intermédiaire entre la première position (P) et la deuxième position (P') prédéterminée.

2. Dispositif selon la revendication 1, **caractérisé en ce que** le dispositif comprend des moyens d'obtention (130, 230, 330) capables d'obtenir un signal indicatif de la position relative des première et deuxième sources,

3. Dispositif selon une des revendications 1 à 2, **caractérisé en ce que** les moyens de commande du flux lumineux (140, 240, 340) sont configurés pour commander la première source de manière à ce que la première source (110, 210, 310) émette un flux lumineux d'une première intensité égale à l'intensité inférieure de la première source lorsque la position relative indiquée correspond à la première position prédéterminée (P), et un flux d'une deuxième intensité égale à l'intensité supérieure de la première source lorsque la position relative indiquée correspond à la deuxième position prédéterminée (P').

4. Dispositif selon une des revendications 1 à 3, **caractérisé en ce que** les moyens de commande du flux lumineux (140, 240, 340) sont configurés pour commander la deuxième source de manière à ce que la deuxième source (120, 220, 320) émette un flux lumineux d'une première intensité égale à l'intensité supérieure de la deuxième source lorsque la position relative indiquée correspond à la première position prédéterminée (P), et un flux d'une deuxième intensité égale à l'intensité inférieure de la deuxième source lorsque la position relative indiquée correspond à la deuxième position prédéterminée (P').

5. Dispositif selon une des revendications 1 à 4, **caractérisé en ce que** les moyens de commande du flux lumineux sont configurés pour commander les première et deuxième sources lumineuses de sorte à ce que la somme des premières intensités du flux lumineux émis par ces sources soit inférieure ou égale à une intensité lumineuse supérieure réglementaire prédéterminée de ladite fonction lumineuse réglementaire prédéterminée.

6. Dispositif selon une des revendications 1 à 4, **caractérisé en ce que** les moyens de commande du flux lumineux sont configurés pour commander les première et deuxième sources lumineuses de sorte à ce que la somme des deuxièmes intensités du flux lumineux émis par ces sources soit supérieure ou égale à une intensité lumineuse inférieure réglementaire prédéterminée de ladite fonction lumineuse réglementaire prédéterminée.

7. Dispositif selon une des revendications précédentes, **caractérisé en ce que** l'intensité supérieure est l'intensité lumineuse maximale que ladite source est capable d'émettre.

8. Dispositif selon une des revendications 1 à 7, **caractérisé en ce que** les moyens de commande du flux lumineux sont configurés de manière à ce que la source mobile émette un flux d'une intensité qui soit fonction d'une position intermédiaire entre la première position (P) et la deuxième position (P') prédéterminée.

9. Dispositif selon une des revendications 1 à 8, prise ensemble avec la revendication 2, **caractérisé en ce que** les moyens d'obtention (130, 330) comprennent des moyens de détection de la position relative des première et deuxième sources.

10. Véhicule automobile équipé d'un dispositif lumineux, **caractérisé en ce que** le dispositif lumineux correspond au dispositif selon une des revendications 1 à 9.

## Patentansprüche

1. Leuchtvorrichtung (100, 200, 300) für ein Kraftfahrzeug, die mindestens zwei Lichtquellen (110, 120; 210, 220; 310, 320) enthält, die dazu bestimmt sind, bei der Erzeugung einer gleichen vorbestimmten vorschriftsmäßigen Leuchtfunktion des Kraftfahrzeugs mitzuwirken, von denen mindestens eine erste Quelle (110, 210, 310) dazu bestimmt ist, auf einem Teil des ortsfesten hinteren Kotflügels des Kraftfahrzeugs angeordnet zu sein, und mindestens eine zweite Quelle (120, 220, 320) dazu bestimmt ist, auf einem beweglichen Teil des Fahrzeugs angeordnet zu sein, wobei der bewegliche Teil die Tür des Kofferraums des Fahrzeugs ist, damit die erste (110, 210, 310) und die zweite (120, 220, 320) Quelle fähig sind, mindestens zwei verschiedene und vorbestimmte relative Stellungen (P, P') zueinander einzunehmen, wobei die erste vorbestimmte Stellung der geschlossenen Stellung der Tür des Kofferraums entspricht, und die zweite vorbestimmte Stellung der offenen Stellung der Tür des Kofferraums entspricht, wobei die Vorrichtung so ist, dass die Vorrichtung Steuereinrichtungen des Lichtstroms (140, 240, 340) mindestens einer der Lichtquellen enthält, die konfiguriert sind, um abhängig von der relativen Stellung der ersten (110, 210, 310) und der zweiten (120, 220, 320) Quelle die Emission unterschiedlicher Lichtströme durch diese Lichtquelle zu steuern,
und dass die Steuereinrichtungen des Lichtstroms konfiguriert sind, um die erste und zweite Lichtquelle so zu steuern, dass diese Quellen, wenn sie in der ersten relativen Stellung sind, zusammen einen ersten globalen Lichtstrom emittieren, der fähig ist, die vorbestimmte vorschriftsmäßige Leuchtfunktion zu erzeugen, und wenn sie in der zweiten relativen Stellung sind, zusammen einen zweiten globalen Lichtstrom mit einer anderen Stärke als der erste globale Lichtstrom emittieren, der fähig ist, die vorbestimmte vorschriftsmäßige Leuchtfunktion zu erzeugen,
und die Vorrichtung so ist, dass die Steuereinrichtungen des Lichtstroms so konfiguriert sind, dass die Lichtstärke der ersten Quelle (110, 210, 310) in einer der zwei vorbestimmten Stellungen (P, P') eine niedrigere Stärke und in der anderen der zwei vorbestimmten Stellungen (P, P') eine höhere Stärke ist, die Leuchtstärke der zweiten Quelle (120, 220, 320) in einer der zwei vorbestimmten Stellungen (P, P') eine niedrigere Stärke und in der anderen der zwei vorbestimmten Stellungen (P, P') eine höhere Stärke ist,
wobei die Vorrichtung **dadurch gekennzeichnet ist, dass** die Steuereinrichtungen des Lichtstroms (140, 240, 340) so konfiguriert sind, dass die erste (110, 210, 310) und/oder die zweite (120, 220, 320) Quelle einen Strom einer Stärke emittiert, die zwischen der niedrigeren Stärke und der höheren Stärke liegt, wenn die angezeigte Stellung eine Zwischenstellung zwischen der ersten (P) und der zweiten vorbestimmten Stellung (P') ist.

2. Vorrichtung nach Anspruch 1, **dadurch gekennzeichnet, dass** die Vorrichtung Erhaltseinrichtungen (130, 230, 330) enthält, die fähig sind, ein die relative Stellung der ersten und der zweiten Quelle anzeigendes Signal zu erhalten.

3. Vorrichtung nach einem der Ansprüche 1 bis 2, **dadurch gekennzeichnet, dass** die Steuereinrichtungen des Lichtstroms (140, 240, 340) konfiguriert sind, um die erste Quelle so zu steuern, dass die erste Quelle (110, 210, 310) einen Lichtstrom einer ersten Stärke gleich der niedrigeren Stärke der ersten Quelle, wenn die angezeigte relative Stellung der ersten vorbestimmten Stellung entspricht (P), und einen Strom einer zweiten Stärke gleich der höheren Stärke der ersten Quelle emittiert, wenn die angezeigte relative Stellung der zweiten vorbestimmten Stellung (P') entspricht.

4. Vorrichtung nach einem der Ansprüche 1 bis 3, **dadurch gekennzeichnet, dass** die Steuereinrichtungen des Lichtstroms (140, 240, 340) konfiguriert sind, um die zweite Quelle so zu steuern, dass die zweite Quelle (120, 220, 320) einen Lichtstrom einer ersten Stärke gleich der höheren Stärke der zweiten Quelle, wenn die angezeigte relative Stellung der ersten vorbestimmten Stellung (P) entspricht, und einen Strom einer zweiten Stärke gleich der niedrigeren Stärke der zweiten Quelle emittiert, wenn die anzeigte relative Stellung der zweiten vorbestimmten Stellung (P') entspricht.

5. Vorrichtung nach einem der Ansprüche 1 bis 4, **dadurch gekennzeichnet, dass** die Steuereinrichtungen des Lichtstroms konfiguriert sind, um die erste und zweite Lichtquelle so zu steuern, dass die Summe der ersten Stärken des von diesen Quellen emittierten Lichtstroms niedriger als eine oder gleich einer vorbestimmten vorschriftsmäßigen höheren Lichtstärke der vorbestimmten vorschriftsmäßigen Leuchtfunktion ist.

6. Vorrichtung nach einem der Ansprüche 1 bis 4, **dadurch gekennzeichnet, dass** die Steuereinrichtungen des Lichtstroms konfiguriert sind, um die erste und die zweite Lichtquelle so zu steuern, dass die Summe der zweiten Stärken des von diesen Quellen emittierten Lichtstroms höher als eine oder gleich einer vorbestimmten vorschriftsmäßigen niedrigeren Lichtstärke der vorbestimmten vorschriftsmäßigen Leuchtfunktion ist.

7. Vorrichtung nach einem der vorhergehenden Ansprüche, **dadurch gekennzeichnet, dass** die höhere Stärke die maximale Lichtstärke ist, die die Quelle emittieren kann.

8. Vorrichtung nach einem der Ansprüche 1 bis 7, **dadurch gekennzeichnet, dass** die Steuereinrichtungen des Lichtstroms so konfiguriert sind, dass die bewegliche Quelle einen Strom einer Stärke emittiert, die von einer Zwischenstellung zwischen der ersten Stellung (P) und der zweiten vorbestimmten Stellung (P') abhängt.

9. Vorrichtung nach einem der Ansprüche 1 bis 8, zusammen mit Anspruch 2, **dadurch gekennzeichnet, dass** die Erhaltseinrichtungen (130, 330) Einrichtungen zur Erkennung der relativen Stellung der ersten und zweiten Quellen enthalten.

10. Kraftfahrzeug ausgestattet mit einer Leuchtvorrichtung, **dadurch gekennzeichnet, dass** die Leuchtvorrichtung der Vorrichtung nach einem der Ansprüche 1 bis 9 entspricht.

## Claims

1. Luminous device (100, 200, 300) for a motor vehicle, comprising at least two light sources (110,120; 210,220; 310,320) intended to contribute to the production of one and the same predetermined regulatory luminous function of the motor vehicle, of which at least one first source (110, 210, 310) is intended to be arranged on a part of the fixed rear wing of the motor vehicle, and at least one second source (120, 220, 320) is intended to be arranged on a mobile part of the vehicle, the mobile part being the boot lid of the vehicle, such that the first (110, 210, 310) and the second (120, 220, 320) sources are capable of assuming at least two distinct and predetermined relative positions (P, P') relative to one another, the first predetermined position corresponding to the closed position of the boot lid, and the second predetermined position corresponding to the open position of the boot lid, the device being such that
the device comprises means for controlling the light flux (140, 240, 340) from at least one of the light sources, configured to control the emission of different light fluxes by this light source, according to the relative position of the first (110, 210, 310) and of the second (120, 220, 320) sources, and such that
the means for controlling the light flux are configured to control the first and second light sources such that these sources, when they are in said first relative position, together emit a first overall light flux capable of producing said predetermined regulatory luminous function, and, when they are in said second relative position, together emit a second overall light flux, of a different intensity to the first overall light flux, capable of producing said predetermined regulatory luminous function,
and the device being such that
the means for controlling the light flux are configured such that the light intensity of the first source (110, 210, 310) is a lower intensity in one of the two predetermined positions (P, P') and is a higher intensity in the other of the two predetermined positions (P, P'), the light intensity of the second source (120, 220, 320) is a lower intensity in one of the two predetermined positions (P, P') and is a higher intensity in the other of the two predetermined positions (P, P'),
the device being **characterized in that**
the means for controlling the light flux (140, 240, 340) are configured such that the first (110, 210, 310) and/or the second (120, 220, 320) source emits a flux of an intensity between the lower intensity and the higher intensity when the indicated position is an intermediate position between the first position (P) and the second predetermined position (P').

2. Device according to Claim 1, **characterized in that** the device comprises obtaining means (130, 230, 330) capable of obtaining a signal indicative of the relative position of the first and second sources.

3. Device according to either of Claims 1 and 2, **characterized in that** the means for controlling the light flux (140, 240, 340) are configured to control the first source such that the first source (110, 210, 310) emits a light flux of a first intensity equal to the lower intensity of the first source when the indicated relative position corresponds to the first predetermined position (P), and a flux of a second intensity equal to the higher intensity of the first source when the indicated relative position corresponds to the second predetermined position (P').

4. Device according to one of Claims 1 to 3, **characterized in that** the means for controlling the light flux (140, 240, 340) are configured to control the second source such that the second source (120, 220, 320) emits a light flux of a first intensity equal to the higher intensity of the second source when the indicated relative position corresponds to the first predetermined position (P), and a flux of a second intensity equal to the lower intensity of the second source when the indicated relative position corresponds to the second predetermined position (P').

5. Device according to one of Claims 1 to 4, **characterized in that** the means for controlling the light flux are configured to control the first and second light sources such that the sum of the first intensities of the light flux emitted by these sources is lower than or equal to a higher predetermined regulatory light intensity of said predetermined regulatory luminous function.

6. Device according to one of Claims 1 to 4, **characterized in that** the means for controlling the light flux are configured to control the first and second light sources such that the sum of the second intensities of the light flux emitted by these sources is higher than or equal to a lower predetermined regulatory light intensity of said predetermined regulatory light function.

7. Device according to one of the preceding claims, **characterized in that** the higher intensity is the maximum light intensity that said source is capable of emitting.

8. Device according to one of Claims 1 to 7, **characterized in that** the means for controlling the light flux are configured such that the mobile source emits a flux of an intensity which is a function of an intermediate position between the first position (P) and the second predetermined position (P').

9. Device according to one of Claims 1 to 8, considered in combination with Claim 2, **characterized in that** the obtaining means (130, 330) comprise means for detecting the relative position of the first and second sources.

10. Motor vehicle equipped with a luminous device, **characterized in that** the light device corresponds to the device according to one of Claims 1 to 9.
